# EUROPÄISCHE PATENTSCHRIFT

(11) **EP 1 112 795 B1**
(45) Veröffentlichungstag und Bekanntmachung des Hinweises auf die Patenterteilung: **20.11.2002**
(21) Anmeldenummer: 00811217.9
(22) Anmeldetag: 21.12.2000
(51) Int. Cl.: B23B 51/00, B28D 1/00

(54) **Saugwerkzeug**
Suction tool
Outil aspirant

(30) Priorität: 03.01.2000 DE 10000015
(43) Veröffentlichungstag der Anmeldung: 04.07.2001
(73) Patentinhaber: HILTI Aktiengesellschaft, 9494 Schaan (LI)
(72) Erfinder: Kleine, Werner, 28832 Achim (DE); Bongers, Hans-Werner, 81477 München (DE)
(74) Vertreter: Wildi, Roland

(56) Entgegenhaltungen:
- DE-A- 2 918 629
- DE-A- 19 810 192

## Beschreibung

Die Erfindung betrifft ein Werkzeug zum Bohren und/oder Meisseln, einsetzbar in eine Handwerkzeugmaschine, die eine Absaugvorrichtung mit einem das Werkzeug umfassenden Gehäuse aufweist, mit einem rohrförmigen Schaft, der einen axial verlaufenden Durchgangskanal besitzt und mit einem, dem bohrrichtungsseitigen Ende des Schaftes gegenüberliegenden, mit dem Gehäuse zusammenwirkenden Anschlussteil, das gegenüber dem Schaft einen grösseren Durchmesser aufweist und mit einer, in den Durchgangskanal mündenden, zum Umfang hin offene Querbohrung versehen ist (siehe DE-A-19810192).

Die Werkzeuge der genannten Art dienen der Bearbeitung von Gestein, Beton, Mauerwerk und dergleichen spröden Materialen. So sind beispielsweise Werkzeuge bekannt, bei denen das abgetragene Bohrklein mittels wenigstens einer am Schaft angeordneten wendelförmigen Abfuhrnut aus dem Bohrloch abtransportiert wird. Darüber hinaus sind in der Vergangenheit auch sogenannte Saugbohrer bekannt geworden. Diese bestehen beispielsweise aus einem eine axiale Bohrung aufweisenden Werkzeug, das mit einer Absaugvorrichtung verbindbar ist, die an eine einen Unterdruck erzeugende Vorrichtung, insbesondere einen Staubsauger oder dergleichen, angeschlossen werden kann. Solche Saugbohrer erbringen dank der Absaugung des Bohrkleins, gegenüber Werkzeugen mit wendelförmigen Abfuhrnuten, eine höhere Bohrleistung und eine bessere Reinigung des Bohrlochs.

Ein derartiges als Saugbohrer ausgebildetes Werkzeug ist beispielsweise in der DE 198 10 192 A1 offenbart. Dieses bekannte Werkzeug, das beispielsweise in eine Handwerkzeugmaschine einsetzbar ist, die eine Absaugvorrichtung mit einem das Werkzeug umfassenden Gehäuse aufweist, besitzt einen rohrförmigen Schaft, der einen axial verlaufenden Durchgangskanal aufweist. Ein dem bohrrichtungsseitigen Ende des Schaftes gegenüberliegendes Anschlussteil wirkt mit dem Gehäuse zusammen. Das Anschlussteil weist gegenüber dem Schaft einen grösseren Durchmesser auf. Eine zum Umfang des Anschlussteils hin offene Querbohrung mündet in den Durchgangskanal.

Bei diesem bekannten Werkzeug ist das Anschlussteil mit dem Schaft verbunden, beispielsweise verschweisst oder verlötet. Ferner ist es bei einem solchen Werkzeug auch bekannt Schaft und Anschlussteil einstückig auszubilden, wie dies beispielsweise die DE 196 03 528 A1 zeigt.

Die bekannte Ausgestaltung des Anschlussteils, wirkt sich, insbesondere bei einstückiger Ausbildung, wirtschaftlich negativ aus, da je nach Durchmesser des Werkzeugs eine erhebliche Zerspanung notwendig ist. Der maximale Durchmesser des Anschlussteils liegt bei der Herstellung den Durchmesser des Rohlings fest. Die an das Anschlussteil angrenzenden Bereiche des Schaftes oder eines Einsteckendes müssen, beispielsweise durch Zerspanen, auf den gewünschten Durchmesser reduziert werden.

Aufgrund der hohen Masse, hervorgerufen durch das Anschlussteil, weisen diese bekannten Werkzeuge ausserdem eine geringere Schlagenergieübertragung zwischen Handwerkzeugmaschine und Werkzeug auf, unabhängig davon, ob es sich um ein einstückiges Werkzeug oder ein mit dem Schaft verbundenes Anschlussteil handelt.

Der vorliegenden Erfindung liegt die Aufgabe zugrunde, ein Werkzeug zum Bohren und/oder Meisseln zu schaffen, das wirtschaftlich herstellbar ist und mit dem sich die Schlagenergieübertragung zwischen Handwerkzeugmaschine und Werkzeug optimieren lässt.

Erfindungsgemäss wird die Aufgabe bei einem Werkzeug der eingangs genannten Art dadurch gelöst, dass das Anschlussteil einen Kern und wenigstens einen den Kern umfassenden Adapter aufweist.

Die Ausbildung des Anschlussteils durch einen Kern und einen, den Kern umfassenden Adapter, ermöglicht eine vorteilhafte Anpassung der Werkzeuge mit unterschiedlichen Durchmessern des Schaftes an die Absaugvorrichtung. So bietet es sich an, das Gehäuse der Absaugvorrichtung auf das Werkzeug mit dem grössten Durchmesser abzustimmen und im Bereich des Anschlussteiles, bei einer Variation des Durchmessers, die Differenz durch den erfindungsgemässen Adapter auszugleichen. Somit ist es möglich, das Werkzeug unter anderen Gesichtspunkten, beispielsweise der Energieübertragung und der Kosten, zu optimieren. Zudem wird das herstellungstechnisch- und materialaufwendige Zerspanen bei der Herstellung des Werkzeugs vermieden.

Vorteilhafterweise ist der Adapter drehfest mit dem Kern verbunden.

Zweckmässigerweise ist der Adapter von einem Material gebildet, welches eine geringere Dichte als der Schaft und/oder der Kern aufweist. Dadurch erfolgt eine optimalere Schlagenergieübertragung, da eine Massenanreicherung im Bereich des Anschlussteils verhindert wird. Darüber hinaus wird die unerwünschte Massenanreicherung auch dadurch erreicht, dass vorteilhafterweise der Adapter eine geringere Dichte als der Kern aufweist.

Beispielsweise wird die unerwünschte Massenanreicherung im Bereich des Anschlussteils dadurch verhindert, dass der Adapter aus dünnwandigem Material, beispielsweise Stahlblech, besteht.

Eine weitere Verhinderung einer Massenanreicherung wird mit der Verwendung von vorzugsweise Kunststoff, beispielsweise Polyamid für den Adapter, welcher eine geringere Dichte gegenüber dem Schaft aufweist, erwirkt. Kunststoff für den Adapter zu verwenden, wirkt sich im Form- und Montageprozess positiv auf die herstellungstechnischen Anforderungen und somit Herstellungskosten aus. Zusätzlich ergeben sich dadurch eine höhere Elastizität und gute Dichtungseigenschaften des Adapters.

Bei Werkzeugen, bei denen die Reduktion der Herstellungskosten im Vordergrund steht, kann der Adapter beispielsweise unlösbar mit dem Kern verbunden sein.

Im Rahmen einer unlösbaren Verbindung zwischen Adapter und Kern bildet es sich im Sinne einer produktionstechnisch optimierten Lösung an, den Adapter beispielsweise auf den Kern zu spritzen.

Um eine einfache Adaption von Werkzeugen an unterschiedliche Durchmesser in einer bestimmten Absaugvorrichtung zu gewährleisten, ist der Adapter vorzugsweise lösbar auf den Kern aufgebracht. Somit lassen sich die Abmessungen des Werkzeugs durch die Verwendung von verschieden dimensionierten Adapteren variieren.

Eine zweckmässige, lösbare Verbindung zwischen Adapter und Kern kann darin bestehen, dass Schultern und Gegenschultern vorgesehen sind.

Die Erfindung wird nachstehend anhand eines Ausführungsbeispieles näher erläutert. Es zeigen:
- Fig. 1: einen Teil eines erfindungsgemässen Werkzeuges mit Absaugvorrichtung teilweise im Axialschnitt;
- Fig. 2: einen Schnitt längs der Linie II-II der Fig.1, in vergrösserter Darstellung.

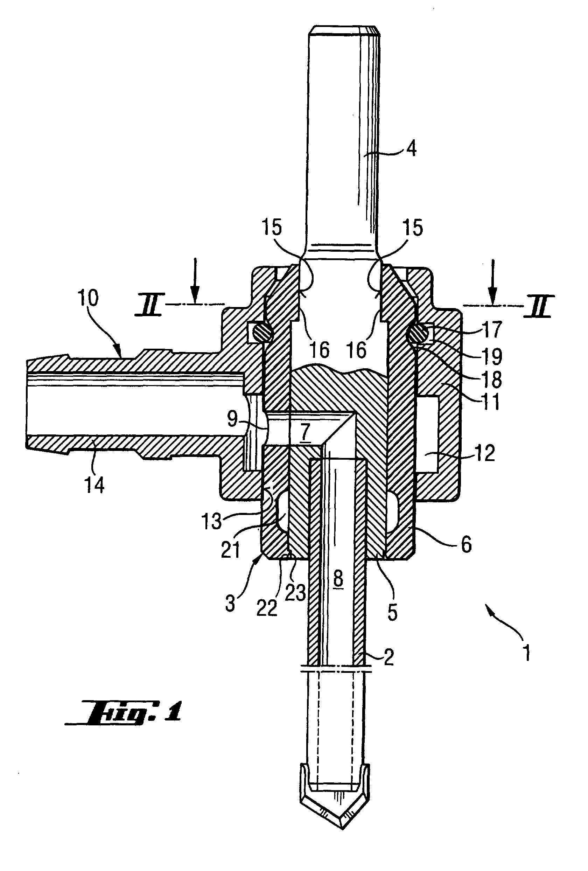

Fig. 1 zeigt ein insgesamt mit 1 bezeichnetes Werkzeug, bestehend aus einem rohrförmigen Schaft 2, einem insgesamt mit 3 bezeichneten Anschlussteil und einem Einsteckende 4. Das Werkzeug 1 wird im Bereich des Anschlussteils 3 von einer insgesamt mit 10 bezeichneten Absaugvorrichtung umfasst.

Der rohrförmige Schaft 2 besitzt einen axial verlaufenden Durchgangskanal 8 und ist an seinem Ende mit dem Anschlussteil 3 verbunden. Das Einsteckende 4 dient dem Anschluss an eine, zeichnerisch nicht dargestellte, Handwerkzeugmaschine. Das Anschlussteil 3 besteht aus einem Kern 5, der zweckmässigerweise aus demselben Material ist wie das Einsteckende 4, sowie aus einem Adapter 6, bestehend aus Kunststoff. Das Anschlussteil 3 besitzt eine Querbohrung 7, die in den Durchgangskanal 8 des Schaftes 2 mündet und eine Öffnung 9 an der Umfangsfläche des Adapters 6 aufweist.

Die Absaugvorrichtung 10 besitzt ein Gehäuse 11, welches das Anschlussteil 3 an seinem Umfang entlang völlig und entlang der Längsachse grösstenteils umfasst. Das Gehäuse 11 bildet mit der vom Gehäuse 11 umfassten Umfangsfläche des Adapters 6 eine Saugkammer 12, in die sich die Mündungsöffnung 9 der Querbohrung 7 erstreckt. Die Umfangsfläche des Adapters 6 und Kontaktflächen 13 des Gehäuses 11 der Absaugvorrichtung 10 wirken abdichtend. Ein am Gehäuse 11 angeordneter Ansaugstutzen 14, mündet in die Saugkammer 12.

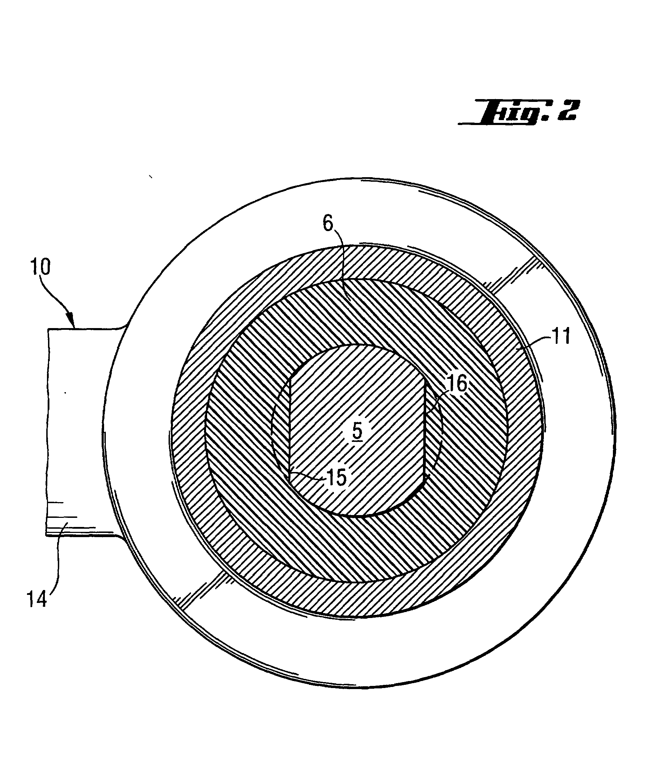

Auf der dem Einsteckende 4 zugewandten Endzone des Adapters 6 sind einander gegenüberliegende Anflachungen 15 angeordnet, wie dies auch Fig. 2 zeigt. Um eine Drehbewegung des Adapters 6 gegenüber dem Kern 5 zu verhindern, weist dieser komplementär ausgebildete Segmentausnehmungen 16 auf, wie dies ebenfalls auch Fig. 2 zeigt. Zugleich dient die Segmentausnehmung 16 als Anschlagschulter für den Adapter 6. Angrenzend an diesen Bereich ist ein, den Aussenumfang des Adapters 6 zweckmässigerweise teilweise umfassender, O-Ring 17, in einer Ausnehmung 18, angeordnet. Die Ausnehmung 18 erstreckt sich über den gesamten Umfang des Adapters 6 und ist derart ausgebildet, dass ein Teil des O-Rings 17 die Umfangsfläche des Adapters 6 radial überragt. Im Gehäuse 11 ist eine Nut 19 angebracht, sodass der auf dem Adapter 6 angeordnete O-Ring 17 in die Nut 19 bringbar ist.

Somit liegt eine lösbare Verbindung zwischen dem Gehäuse 11 der Absaugvorrichtung 10 und dem Adapter 6 vor.

Um im montierten Zustand ein Abgleiten des Adapters 6 vom Kern 5 in Richtung Einsteckende 4 zu verhindern, ist auf dem bohrrichtungsseitigen Endabschnitt des Adapters 6 ein Schnappmechanismus ausgebildet. Der Schnappmechanismus ist durch eine an der Innenfläche des Adapters 6 angeordnete Ausnehmung 21, die sich vorzugsweise über den gesamten Umfang erstreckt, und einen an der Stirnseite angeordneten, sich radial nach innen erstreckenden Steg 22, ausgebildet. Im montierten Zustand greift der Steg 22 in eine auf dem Kern 5 angeordnete, komplementär zum Steg 22 ausgestaltete, Nut 23.

## Patentansprüche

1. Werkzeug (1) zum Bohren und/oder Meisseln, einsetzbar in eine Handwerkzeugmaschine, die eine Absaugvorrichtung (10) mit einem das Werkzeug umfassenden Gehäuse (11) aufweist, mit einem rohrförmigen Schaft (2) der einen axial verlaufenden Durchgangskanal (8) besitzt und mit einem dem bohrrichtungsseitigen Ende des Schaftes (2) gegenüberliegenden, mit dem Gehäuse (11) zusammenwirkenden Anschlussteil (3), das gegenüber dem Schaft (2) einen grösseren Durchmesser aufweist und mit einer, in den Durchgangskanal (8) mündenden, zum Umfang hin offenen Querbohrung (7) versehen ist, **dadurch gekennzeichnet, dass** das Anschlussteil (3) einen Kern (5) und wenigstens einen den Kern (5) umfassenden Adapter (6) aufweist.

2. Werkzeug nach Anspruch 1, **dadurch gekennzeichnet, dass** der Adapter (6) drehfest mit dem Kern (5) verbunden ist.

3. Werkzeug nach Anspruch 1 oder 2, **dadurch gekennzeichnet, dass** der Adapter (6) von einem Material gebildet ist, das gegenüber dem Material des Kerns (5) und des Schaftes (2) eine geringere Dichte aufweist.

4. Werkzeug nach einem der Ansprüche 1 bis 3, **dadurch gekennzeichnet, dass** der Adapter (6) aus Kunststoff gebildet ist.

5. Werkzeug nach einem der Ansprüche 1 bis 4, **dadurch gekennzeichnet, dass** der Adapter unlösbar mit dem Kern verbunden ist.

6. Werkzeug nach einem der Ansprüche 1 bis 5, **dadurch gekennzeichnet, dass** der Adapter auf den Kern aufgespritzt ist.

7. Werkzeug nach einem der Ansprüche 1 bis 4, **dadurch gekennzeichnet, dass** der Adapter (6) lösbar mit dem Kern (5) verbunden ist.

8. Werkzeug nach Anspruch 7, **dadurch gekennzeichnet, dass** der Adapter (6) mittels Schultern und Gegenschultern mit dem Kern (5) verbunden ist.

## Claims

1. Tool (1) for drilling and/or chiselling, insertible into a handheld machine which comprises a suctioning device (10) with a housing (11) which surrounds the tool, with a tubular shaft (2) with an axially extending channel (8), and with a connecting part (3) which is located opposite the end of the shaft (2) as seen in the drilling direction and co-acts with the housing (11) and which as a larger diameter relative to the shaft (2) and which is provided with a cross-bore (7) which merges into the channel (8) and is open towards the periphery, **characterised in that** the connecting part (3) comprises a core (5) and at least one adapter which surrounds the core (5).

2. Tool according to Claim 1, **characterised in that** the adapter (6) is non-rotationally connected to the core (5).

3. Tool according to Claim 1 or 2, **characterised in that** the adapter (6) is formed of a material of lesser density than the material of the core (5) and the shaft (2).

4. Tool according to one of Claims 1 to 3, **characterised in that** the adapter (6) is made of plastic.

5. Tool according to one of Claims 1 to 4, **characterised in that** the adapter is non-detachably connected to the core.

6. Tool according to one of Claims 1 to 5, **characterised in that** the adapter is moulded onto the core.

7. Tool according to one of Claims 1 to 4, **characterised in that** the adapter (6) is detachably connected to the core (5).

8. Tool according to Claim 7, **characterised in that** the adapter (6) is connected to the core (5) by means of shoulders and counter-shoulders.

## Revendications

1. Outil (1) de perçage et/ou de burinage, pouvant être inséré dans une machine-outil manuelle qui comporte un dispositif d'aspiration (10) avec un boîtier (11) entourant l'outil, comportant une tige (2) de forme tubulaire qui présente un canal traversant (8) s'étendant axialement et comportant une partie de raccordement (3) qui face à l'extrémité de la tige (2) côté sens de perçage, coopère avec le boitier (11), présente un plus grand diamètre que la tige (2) et et est pourvue d'un perçage transversal (7) débouchant dans le canal traversant (8) et ouvert vers la circonférence, **caractérisé en ce que** la partie de raccordement (3) comporte un noyau (5) et au moins un adaptateur (6) entourant le noyau (5).

2. Outil selon la revendication 1, **caractérisé en ce que** l'adaptateur (6) est relié solidairement en rotation au noyau (5).

3. Outil selon la revendication 1 ou 2, **caractérisé en ce que** l'adaptateur (6) est constitué d'une matière qui présente une moindre densité que la matière du noyau (5) et de la tige (2).

4. Outil selon l'une des revendications 1 à 3, **caractérisé en ce que** l'adaptateur (6) est en matière plastique.

5. Outil selon l'une des revendications 1 à 4, **caractérisé en ce que** l'adaptateur est relié de manière permanente au noyau.

6. Outil selon l'une des revendications 1 à 5, **caractérisé en ce que** l'adaptateur est injecté sur le noyau.

7. Outil selon l'une des revendications 1 à 4, **caractérisé en ce que** l'adaptateur (6) est relié de manière séparable au noyau (5).

8. Outil selon la revendication 7, **caractérisé en ce que** l'adaptateur (6) est relié au noyau (5) au moyen de butées et de contre-butées.
